# FASCICULE DE BREVET EUROPEEN

(11) **EP 0 700 053 B1**
(45) Date de publication et mention de la délivrance du brevet: **14.05.1997**
(21) Numéro de dépôt: 95401969.1
(22) Date de dépôt: 29.08.1995
(51) Int. Cl.: G21C 3/334

(54) **Ensemble de verrouillage réutilisable pour un embout supérieur d'assemblage de combustible nucléaire**
Wiederverwendbare Verschlussvorrichtung für das obere Endstück eines Kernbrennstabbündels
Reusable locking assembly for the upper nozzle of a nuclear fuel assembly

(30) Priorité: 31.08.1994 US 298803
(43) Date de publication de la demande: 06.03.1996
(73) Titulaire: B & W FUEL COMPANY, Lynchburg, VA 24506-0935 (US)
(72) Inventeur: Minor, Barbara A., US-Virginia 24504 (US); Pickerel, Samuel V., US- Virginia 24502 (US); Ridder Richard L., US- Virginia 24503 (US)
(74) Mandataire: Bouget, Lucien

(56) Documents cités:
- EP-A- 0 041 014
- FR-A- 2 341 917
- US-A- 4 687 631
- US-A- 5 268 948

## Description

L'invention est relative de manière générale à des assemblages de combustible nucléaire et plus particulièrement à une fixation à démontage rapide entre un tube-guide et l'embout supérieur d'un assemblage de combustible.

Dans le coeur d'un réacteur nucléaire, chacun des assemblages de combustible est équipé d'un certain nombre de tubes-guides qui sont utilisés pour recevoir des barres de commande. Dans l'industrie nucléaire, les tubes qui sont utilisés pour recevoir des barres de commande sont désignés comme tubes-guides ou tubes de guidage et la structure interne supérieure à laquelle ces tubes sont fixés est désignée comme pièce de fermeture supérieure ou embout supérieur, suivant la désignation du fabricant. En conséquence, on devra comprendre que par la suite, toute référence à un tube-guide ou à une pièce de fermeture supérieure pourra être considérée comme se référant également à un tube de guidage et à un embout.

Les tubes-guides ont une épaisseur de paroi relativement faible et de ce fait nécessitent l'utilisation d'un manchon à leur extrémité supérieure pour fournir un support suffisant en des points de fixation et pour des épaulements de butée. Lors de la fabrication de l'assemblage, les tubes-guides sont introduits à l'intérieur des grilles-entretoises. L'embout supérieur est ensuite aligné, engagé et fixé sur les manchons d'extrémité supérieurs des tubes-guides. Suivant un mode de réalisation caractéristique, les embouts supérieurs et les manchons sont fixés l'un à l'autre en utilisant des liaisons vissées et des coupelles de verrouillage. Quand il devient nécessaire de démonter un embout supérieur d'un assemblage de combustible irradié sur le site du réacteur, l'opération doit être effectuée avec un outillage commandé à distance sous eau. Il en résulte la manutention d'un certain nombre de pièces et la possibilité d'effectuer des vissages avec interversion des pièces de fixation pendant le remontage. La manutention à distance d'un certain nombre de pièces sous eau accroît les possibilités de formation de corps migrants dans l'installation qui peuvent endommager le réacteur et accroître également la durée nécessaire pour effectuer l'opération. Les brevets concernant les dispositifs de retenue des embouts d'assemblages de combustible qui sont parvenus à la connaissance du demandeur de brevet comportent les brevets suivants :

Le brevet américain n° 3.769.158 décrit l'utilisation d'un embout d'extrémité au-dessus de crayons de combustible dans lequel un col de diamètre réduit s'étendant à travers l'ouverture de l'embout présente des anneaux fendus élastiques dans des gorges et se trouve engagé dans l'embout.

Le brevet américain 3.828.868 décrit des tubes-guides qui sont fixés par vissage sur l'embout d'extrémité.

Le brevet américain 4.699.761 décrit l'utilisation d'un manchon fileté à la partie supérieure du tube-guide.

Le brevet américain 5.268.948 décrit un assemblage de verrouillage pour verrouiller et maintenir en position une plaque de support supérieure au-dessus d'un faisceau de combustible nucléaire.

L'invention permet de résoudre le problème évoqué ci-dessus. Elle est relative à un ensemble de verrouillage réutilisable entre un tube-guide et l'embout supérieur d'un assemblage de combustible nucléaire susceptible d'être reconstitué ayant un embout supérieur avec une pluralité d'ouvertures traversantes, chacune dimensionnée pour recevoir un tube guide, caractérisé en ce qu'il comporte :
(a) une ouverture dans l'embout supérieur pourvue d'au moins une rainure ;
(b) un collier de tube-guide fixé à l'extrémité supérieure du tube-guide, ledit collier de tube-guide ayant une partie d'extrémité supérieure filetée et une pluralité d'encoches espacées dans la direction circonférentielle autour de sa partie centrale ;
(c) un collier à ressorts vissé sur le collier de tube-guide, ledit collier à ressorts ayant au moins une partie en saillie radiale qui correspond sensiblement à une rainure de l'ouverture de l'embout supérieur et étant monté rotatif entre une première position dans laquelle la partie en saillie est alignée avec la rainure de l'ouverture pour permettre le montage ou le démontage de l'embout supérieur et une seconde position dans laquelle la partie en saillie n'est pas alignée avec la rainure de l'ouverture de façon que l'embout supérieur soit verrouillé en position sur le tube-guide ; et
(d) deux demi-ressorts fixés à la partie inférieure dudit collier à ressorts, lesdits demi-ressorts ayant chacun une dépression mise en forme pour être introduite de manière élastique dans une encoche dudit collier de tube-guide.

Chaque ouverture peut présenter un embrèvement inférieur prévu pour coopérer avec le collier de tube-guide pour s'opposer au couple produit, lorsqu'on fait tourner le collier à ressorts. Les rainures dirigées suivant l'ouverture présentent une forme permettant le passage des parties en saillie du collier élastique lorsque celui-ci est dans sa première position de montage et de démontage.

Le collier de tube-guide peut comporter une zone à diamètre extérieur réduit entre la partie supérieure filetée et les encoches de sa partie centrale ; un pion d'arrêt logé dans une ouverture radiale traversante de la partie en saillie du collier à ressorts et pénétrant dans la zone à diamètre réduit du collier de tube-guide assure la retenue du collier à ressorts sur le collier de tube-guide.

De manière à faire mieux comprendre la nature et les objets de la présente invention, on fera référence à la description suivante en relation avec les dessins annexés dans lesquels des pièces identiques comportent des numéros de référence identiques et dans lesquels :
- la figure 1 est une vue en perspective du collier à ressorts suivant l'invention ;
- la figure 2 est une vue en perspective du collier de tube-guide selon l'invention ;
- la figure 3 est une vue en perspective de l'invention ;
- la figure 4 est une vue en perspective de l'extrémité supérieure d'un bossage utilisé dans un embout supérieur pour la mise en oeuvre de l'invention ;
- la figure 5 est une vue en perspective de l'extrémité inférieure du bossage solidaire de la plaque adaptatrice utilisé dans un embout supérieur pour la mise en oeuvre de l'invention ;

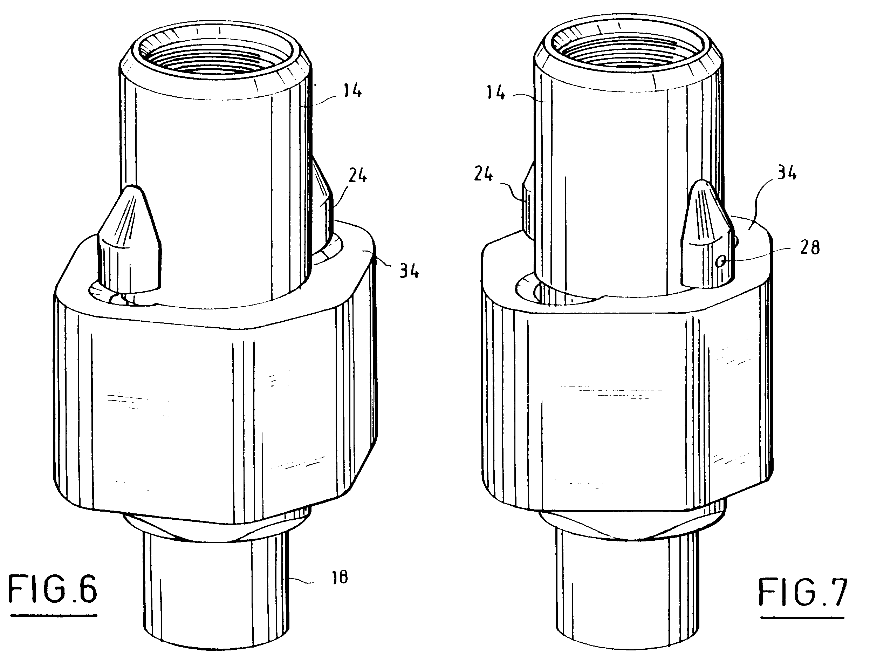

- la figure 6 est une vue montrant le dispositif de l'invention dans une position déverrouillée ;
- la figure 7 est une vue montrant le dispositif de l'invention dans une position verrouillée ;
- la figure 8 est une vue de dessus d'un embout supérieur comportant le dispositif selon l'invention.

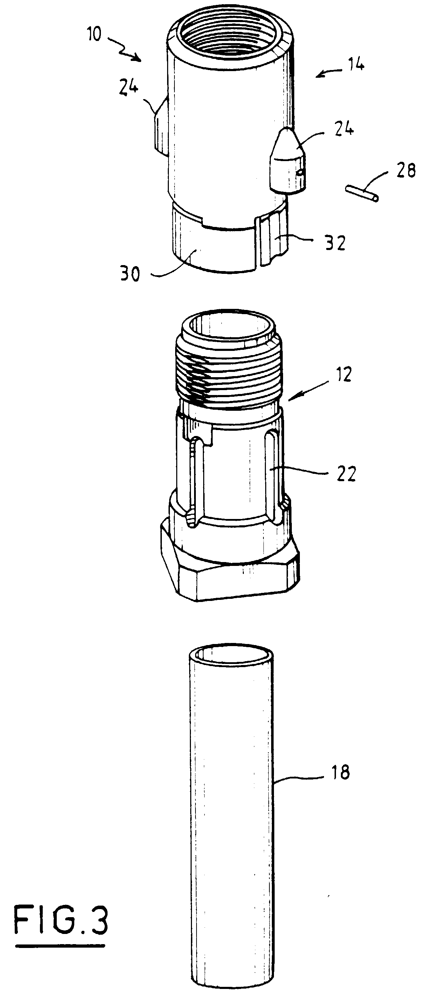

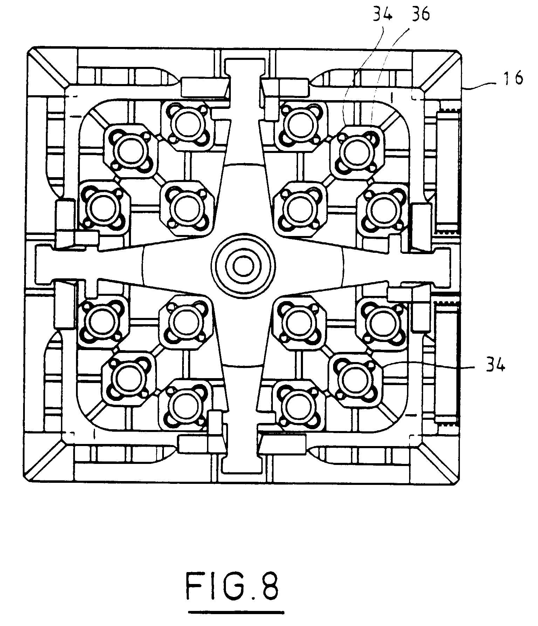

En se référant aux figures, on voit sur la figure 3 que l'invention est désignée de manière générale par le repère 10. L'invention est un dispositif de verrouillage réutilisable entre les tubes-guides et l'embout supérieur (figure 8) d'un assemblage de combustible nucléaire. Le dispositif de verrouillage réutilisable 10 comporte généralement un collier de tube-guide 12, un collier à ressorts 14 et des ouvertures existantes à travers l'embout supérieur 16, dimensionnées chacune pour recevoir un tube-guide et qui sont pourvues chacune d'une rainure et d'un embrèvement pour coopérer avec les colliers 12 et 14.

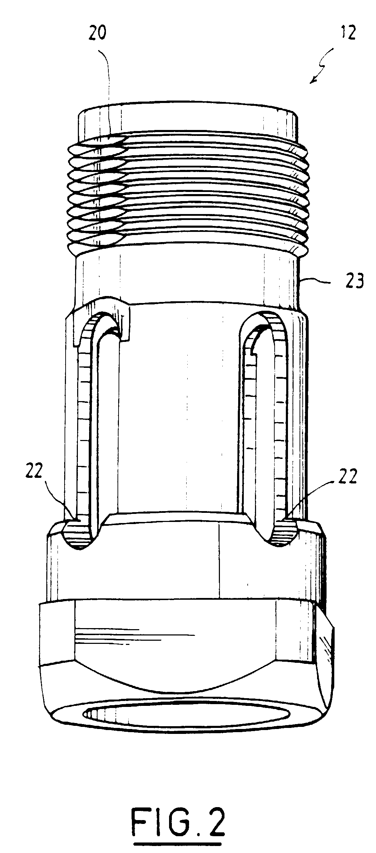

Le collier de tube-guide 12 qui est mieux représenté sur la figure 2, présente une ouverture axiale dimensionnée pour être engagée sans jeu sur un tube-guide 18 et se trouve fixé à l'extrémité supérieure d'un tube-guide 18 par un procédé convenable tel que le soudage. Le collier de tube-guide 12 est réalisé de préférence en un matériau permettant le soudage aux tubes-guides, tel qu'un alliage de zirconium écroui qui est l'alliage qui est utilisé habituellement pour réaliser les tubes-guides. Le collier de tube-guide 12 est fileté à son extrémité supérieure. Des lamages 20 sont découpés dans les filets dans deux positions espacées l'une de l'autre de 180° pour permettre l'engagement du collier à ressorts 14. Des fenêtres verticales ou entailles 22, au nombre de quatre dans le mode de réalisation préférentiel, sont prévues le long de la partie centrale pour coopérer avec les ressorts fixés au collier à ressorts 14. Une rainure circonférentielle de diamètre extérieur réduit 23 est prévue entre le filetage et les entailles verticales 2. La partie inférieure du collier de tube-guide 12 est usinée sous une forme carrée mais pourrait également présenter toute forme polygonale convenable ; le but recherché sera expliqué ci-dessous.

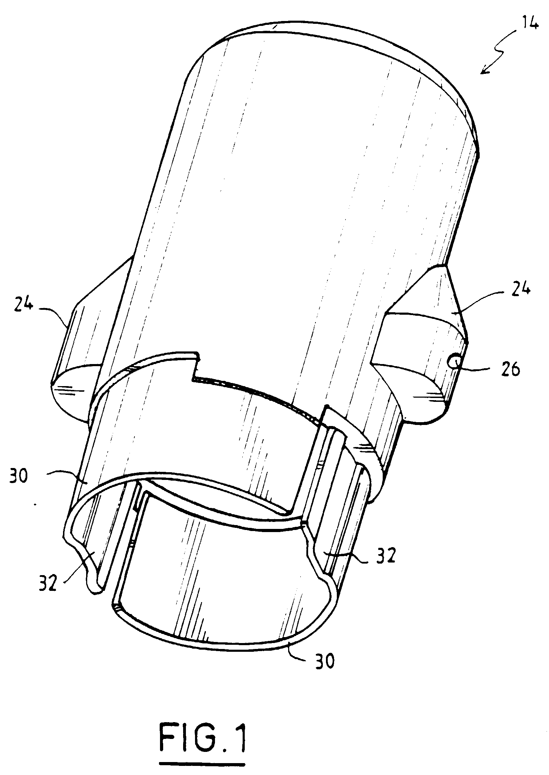

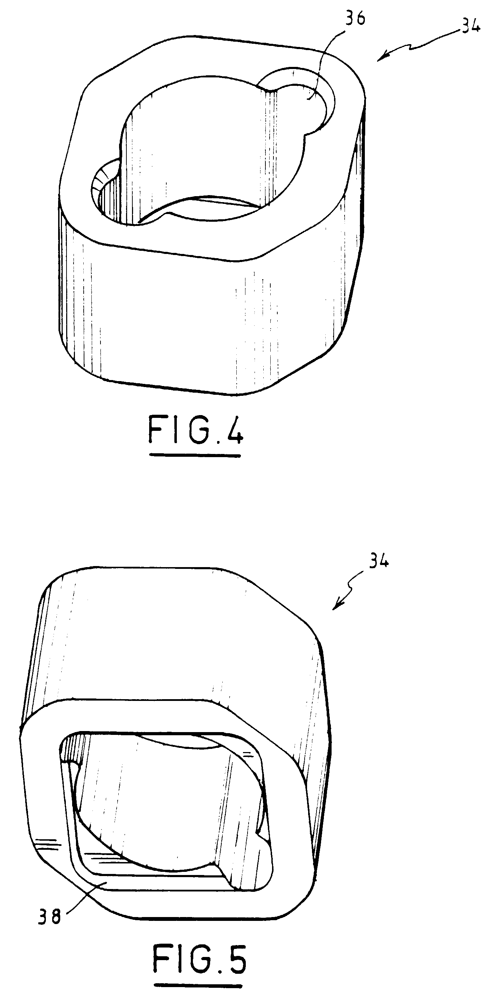

Le collier à ressorts 14 qui est mieux représenté sur la figure 1 est réalisé pour être monté de manière rotative sur le collier de tube-guide 12 et de manière à n'être pas facilement séparable après que les composants aient été assemblés. Dans le mode de réalisation préférentiel, le collier à ressort 14 est creux et se trouve pourvu d'un taraudage intérieur adjacent à son extrémité supérieure qui a la même taille et le même pas que le filetage du collier de tube-guide 12. Le collier à ressorts 14 est pourvu de deux parties en saillie radiale 24 au voisinage de sa partie inférieure qui peuvent être utilisées pour le faire tourner sur le collier de tube-guide. L'une au moins des parties en saillie 24 est pourvue d'une ouverture radiale 26 qui s'étend vers l'intérieur du collier à ressorts 14. Ceci permet d'introduire et de souder en place un pion d'arrêt 28 après que le collier à ressorts 14 ait été monté sur le collier de tube-guide 12. Le pion d'arrêt 28 traverse le collier à ressorts 14 et s'étend à l'intérieur de la zone 23 à diamètre extérieur réduit du collier de tube-guide 12. Le pion d'arrêt 28 peut être soudé par points en position. De cette façon, les épaulements de la zone à diamètre réduit 23 et le pion d'arrêt 28 empêchent le collier à ressort 14 de se dévisser malencontreusement par rapport au collier de tube-guide 12 après assemblage et montage dans un réacteur. Le collier à ressorts 14 et le pion d'arrêt 28 sont réalisés en un matériau convenable pour une utilisation à l'intérieur d'un réacteur nucléaire, tel que l'acier inoxydable 304 L. Deux ressorts semi-circulaires 30 réalisés en un matériau tel que l'Inconel 718 sont soudés sur des languettes de la partie inférieure du collier à ressorts 14. Chaque ressort 30 est pourvu d'une indentation ou d'une dépression 32 qui coopère avec les entailles verticales 22 du collier de tube-guide 12. L'embout supérieur 16 représenté sur la figure 8 est un embout supérieur habituel mis à part le fait que les ouvertures dans les bossages 34 pour les tubes-guides 18 sont pourvus d'une rainure 36 et d'un embrèvement inférieur 38. Dans un but d'illustration, un bossage 34 est représenté sur la figure 4 et sur la figure 5. La rainure 36 est mise en forme et dimensionnée pour permettre le passage des parties en saillie radiale 24 du collier à ressorts 14 à travers l'ouverture. L'embrèvement inférieur 38 de forme sensiblement carrée présente une forme complémentaire de celle de la partie inférieure du collier de tube-guide 12 et se trouve dimensionné pour recevoir sans jeu la partie inférieure du collier de tube-guide 12. L'embrèvement 38 peut ainsi servir à s'opposer à tout couple qui s'exerce lorsqu'on fait tourner le collier à ressorts 14, pour empêcher le collier de tube-guide 12 et le tube-guide 18 de tourner. Ceci sert également à assurer un alignement convenable de la zone inférieure du collier de tube-guide 12 de manière à permettre un accès aux crayons de combustible adjacents au collier. L'extrémité supérieure de la rainure 36 est chanfreinée pour tenir compte d'un léger désalignement des parties en saillie radiale 24 et pour faciliter le mouvement initial de l'embout supérieur 16 pendant le démontage. Les parties en saillie 24 sont également coniques ou inclinées à leur partie supérieure pour faciliter leur alignement avec les rainures 36 pendant le montage de l'embout supérieur 16. L'embrèvement inférieur 38 est également chanfreiné dans le même but. Lors de la mise en oeuvre de l'invention, un collier de tube-guide 12 est fixé à chacun des tubes-guides 18. Le collier à ressorts 14 est ajouté à l'assemblage en le positionnant au-dessus du collier de tube-guide 12 de telle manière que les dépressions 22 du res-sort soient alignées avec les lamages 20 sur le filetage du collier de tube-guide 12 et ensuite en le faisant descendre sur le collier de tube-guide 12. Le collier à ressorts 14 est alors vissé sur le collier de tube-guide jusqu'à ce que les ressorts 30 entrent en contact avec la portion à diamètre élargi à la partie inférieure du collier du tube-guide 12, ce qui aligne l'ouverture radiale 26 avec la zone à diamètre réduit 23. Le pion d'arrêt 28 est introduit dans l'ouverture radiale 26 jusqu'à ce qu'il pénètre à l'intérieur de la zone à diamètre réduit 23 et est alors fixé de manière rigide au collier à ressorts 14 par tout moyen convenable tel qu'un soudage par points. La hauteur de la zone 23 est prévue pour permettre au collier à ressorts 14 de faire à peu près un tour et demi afin de procurer une certaine possibilité d'ajustement à la hauteur des parties en saillie radiale 24 et ainsi à la longueur totale du tube-guide de l'assemblage. Chaque quart de tour du collier à ressort 14 provoque une sortie des dépressions 32 des ressorts de l'un des jeux d'encoches verticales 22 et un engagement dans le jeu suivant. Le collier à ressorts 14 est ainsi monté rotatif entre une première position dans laquelle la partie en saillie 24 est alignée avec une rainure 36 de l'ouverture pour permettre le montage ou le démontage de l'embout supérieur 16 et une seconde position dans laquelle la partie en saillie 24 n'est pas alignée avec une rainure 36 de l'ouverture de telle sorte que l'embout supérieur 16 soit verrouillé en position sur les tubes-guides 16. La mise en place élastique des dépressions de ressort 32 fournit une résistance suffisante pendant le fonctionnement normal du réacteur pour empêcher le collier à ressorts 14 de se dévisser et fournit également une indication à l'opérateur que le collier à ressorts 14 a été indexé dans la position convenable verrouillée ou déverrouillée. L'invention procure un avantage en ce qui concerne les économies de temps lors de la reconstitution des assemblages combustibles. Lors d'essais sur une maquette d'assemblage de combustible, le temps nécessaire pour démonter l'embout supérieur, le remettre en place et vérifier le verrouillage de la liaison a été réduit jusqu'à une durée d'approximativement une heure (à comparer à une durée comprise entre trois et huit heures pour les dispositifs antérieurs). L'invention élimine les corps migrants et le besoin de pièces neuves lors de la reconstitution et le même outillage peut être utilisé aussi bien pour le verrouillage que le déverrouillage de l'embout supérieur.

## Revendications

1. Ensemble de verrouillage réutilisable entre un tube-guide (18) et l'embout supérieur (16) d'un assemblage de combustible nucléaire susceptible d'être reconstitué ayant un embout supérieur (16) avec une pluralité d'ouvertures traversantes, chacune dimensionnée pour recevoir un tube guide (18), caractérisé en ce qu'il comporte :
(a) une ouverture dans l'embout supérieur (16) pourvue d'au moins une rainure (36) ;
(b) un collier de tube-guide (12) fixé à l'extrémité supérieure du tube-guide (18), ledit collier de tube-guide ayant une partie d'extrémité supérieure filetée et une pluralité d'encoches (22) espacées dans la direction circonférentielle autour de sa partie centrale;
(c) un collier à ressorts (14) vissé sur le tube-guide (12), ledit collier à ressorts (14) ayant au moins une partie en saillie radiale (24) qui correspond sensiblement à une rainure (36) de l'ouverture de l'embout supérieur (16) et étant monté rotatif entre une première position dans laquelle la partie en saillie (24) est alignée avec la rainure (36) de l'ouverture pour permettre le montage ou le démontage de l'embout supérieur (16) et une seconde position dans laquelle la partie en saillie (24) n'est pas alignée avec la rainure 36 de l'ouverture de façon que l'embout supérieur (16) soit verrouillé en position sur le tube-guide (18) ; et
(d) deux demi-ressorts (30) fixés à la partie inférieure dudit collier à ressorts (14), lesdits demi-ressorts (30) ayant chacun une dépression (32) mise en forme pour être introduite de manière élastique dans une encoche (22) dudit collier de tube-guide (12).

2. Ensemble de verrouillage suivant la revendication 1, caractérisé en ce qu'un embrèvement (38) est prévu à la partie inférieure de l'ouverture à travers l'embout supérieur (16) dont la forme est complémentaire de la forme de la partie inférieure dudit collier de tube-guide (12).

3. Ensemble de verrouillage selon l'une quelconque des revendications 1 et 2, caractérisé en ce que, de plus :
(a) ledit collier de tube-guide (12) a une zone (23) à diamètre extérieur réduit entre sa partie supérieure filetée et les encoches (22) ; et
(b) un pion d'arrêt (28) logé dans une ouverture radiale (26) à travers la partie en saillie (24) dudit collier à ressorts (14) pénètre à l'intérieur de la zone à diamètre extérieur réduit (23) dudit collier de tube-guide (12).

## Patentansprüche

1. Wiederverwendbare Verriegelungsanordnung zwischen einer Rohrführung (18) und dem oberen Endstück eines Kernbrennstabbündels, das imstande ist, wiederhergestellt zu werden und eine oberes Endstück (16) mit einer Vielzahl von Durchgangsöffnungen aufweist, von denen jede zur Aufnahme einer Rohrführung (18) bemessen ist, dadurch gekennzeichnet, daß sie folgende Merkmale aufweist:
(a) eine Öffnung im oberen Endstück (16), die mit mindestens einer Nut (36) versehen ist;
(b) ein Rohrführungsring (12), der am oberen Ende der Rohrführung (18) befestigt ist, wobei der genannte Rohrführungsring einen oberen, mit Gewinde versehenen Endabschnitt und eine Vielzahl von Vertiefungen (22) aufweist, die in Umfangsrichtung rund um seinen mittleren Abschnitt mit Abstand angeordnet sind;
(c) einen Federring (14), der auf die Rohrführung (12) aufgeschraubt ist, wobei der genannte Federring (14) mindestens einen radial überstehenden Abschnitt (24) aufweist, der im wesentlichen einer Nut (36) der Öffnung des oberen Endstücks (16) entspricht, und drehbar zwischen einer ersten Lage, in welcher der überstehende Abschnitt (24) auf die Nut (36) der Öffnung ausgerichtet ist, um den Ein- oder Ausbau des oberen Endstücks (16) zu gestatten, und einer zweiten Lage angebracht ist, in welcher der überstehende Abschnitt (24) nicht auf die Nut 36 der Öffnung ausgerichtet ist, so daß das obere Endstück (16) in seiner Lage auf der Rohrführung (18) verriegelt ist; und
(d) zwei Halbfedern (30), die am unteren Abschnitt des genannten Federrings (14) befestigt sind, wobei die genannten Halbfedern (30) jeweils eine Mulde (32) aufweisen, die dazu ausgebildet ist, um elastisch in eine Vertiefung (22) des genannten Rohrführungsrings (12) eingeführt zu werden.

2. Verriegelungsanordnung nach Anspruch 1, dadurch gekennzeichnet, daß ein Versatz (38) am unteren Abschnitt der das obere Endstück (16) durchsetzenden Öffnung vorgesehen ist, dessen Form komplementär ist zur Form des unteren Abschnitts des genannten Rohrführungsrings (12).

3. Verriegelungsanordnung nach irgendeinem der Ansprüche 1 und 2, dadurch gekennzeichnet, daß außerdem
(a) der genannte Rohrführungsring (12) eine Zone (23) mit verringertem Außendurchmesser zwischen seinem oberen, mit Gewinde versehenen Abschnitt und den Vertiefungen (22) aufweist; sowie
(b) einen Haltezapfen (28), der in einer radialen Öffnung (26) durch den überstehenden Abschnitt (24) des genannten Federrings (14) hindurch in das Innere der Zone mit verkleinertem Außendurchmesser (23) des genannten Rohrführungsringes (12) eindringt.

## Claims

1. Reusable locking assembly between a guide tube (18) and the upper connector (16) of a nuclear fuel assembly which is capable of being reconstructed, having an upper connector (16) with a plurality of through openings each dimensioned so as to receive a guide tube (18), characterised in that it comprises:
a) an opening in the upper connector (18) which is provided with at least one groove (36);
b) a guide tube collar (12) fixed on the upper end of the guide tube (18), the said guide tube collar having a threaded upper end part and a plurality of slots (22) which are spaced in the circumferential direction around its central part;
c) a spring collar (14) screwed onto the guide tube (12), the said spring collar (14) having at least one radial protecting part (24) which corresponds substantially to a groove (36) of the opening of the upper connector (18) and being mounted so as to rotate between a first position in which the projecting part (24) is aligned with the groove (36) of the opening in order to permit the fitting or the removal of the upper connector (16) and a second position in which the projecting part (24) is not aligned with the groove (36) of the opening in such a way that the upper connector (16) is locked in position on the guide tube (18); and
d) two half-springs (30) fixed on the lower part of the spring collar (14), the said half-springs (30) each having a depression (32) shaped so as to be introduced elastically into a slot (22) of the said guide tube collar (12).

2. Locking assembly according to Claim 1, characterised in that a recess (38) is provided on the lower part of the opening through the upper connector (16), the shape of which is complementary to the shape of the lower part of the said guide tube collar (12).

3. Locking assembly according to any one of Claims 1 and 2, characterised in that furthermore
a) the said guide tube collar (12) has a zone (23) with a reduced external diameter between its upper threaded part and the slots (22); and
b) a stop pin (28) housed in a radial opening (26) through the projecting part (24) of the said spring collar (14) penetrates into the interior of the zone with a reduced external diameter (23) of the said guide tube collar (12).
